# EUROPEAN PATENT APPLICATION

(11) **EP 4 641 382 A1**
(43) Date of publication of application: **29.10.2025**
(21) Application number: 24172460.8
(22) Date of filing: 25.04.2024
(51) Int. Cl.: G06F 9/50, G06F 9/48

(54) **PROTECTION AND CONTROL SYSTEM FOR AN ELECTRICAL SUBSTATION, AND METHOD FOR APPLICATION ORCHESTRATION OF A PROTECTION AND CONTROL SYSTEM**

(71) Applicant: ABB Schweiz AG, 5400 Baden (CH)
(72) Inventor: KOZHAYA, David, 8953 Dietikon (CH); SCHOENBORN, Sandro, 4059 Basel (CH); GOETTEL, Christian, 5442 Fislisbach (CH); FREGNAN, Enrico, 8046 Zürich (CH); SOMMER, Philipp, 8003 Zürich (CH)
(74) Representative: Zimmermann & Partner Patentanwälte mbB

(57) **Abstract**

A Protection and Control, P&C, system (1) for an electrical substation includes a plurality of application execution resources (100, 200, 300, 400, 500) each configured to execute one or more priority P&C applications (101, 102, 201, 202, 301, 302, 401, 501), and configured to execute one or more subordinate applications, a memory (30) for holding one or more subordinate applications (31, 32) to be additionally executed by the application execution resources (100, 200, 300, 400, 500), an application orchestrator (10) configured to determine, among each of the application execution resources, a subordinate execution capability for a subordinate application in the memory (30), and to instruct each of the application execution resources (100, 200, 300, 400, 500) determined to have a subordinate execution capability to execute an instance (110, 210, 220, 310, 320, 410, 510) of the subordinate application (31, 32), one or more application monitors (111, 211, 311, 411, 511) configured to, for an executed subordinate application instance, determine whether an execution condition (112, 212, 312, 412, 512) is met, and when it is determined that the execution condition is not met, terminate the instance.

## Description

### TECHNICAL FIELD

Embodiments of the present disclosure generally relate to the field of Protection and Control (P&C) of electrical substations, and specifically to a P&C system and a corresponding method used in the orchestration of applications in the P&C system.

### BACKGROUND

An electrical substation typically includes Protection and Control (P&C) equipment. For example, excessive currents such as overload or short-circuit currents occurring in the network or grid must be interrupted. The P&C equipment may include a measurement device for judging as to whether an excessive current is flowing, and a circuit breaker for interrupting any such overcurrent.

P&C applications controlling any of the P&C equipment may be executed on dedicated hardware that serves as an application execution resource. In general, some of the P&C applications for substation automation need to follow strict constraints; such kind of applications may be referred to as priority P&C applications, or simply priority applications. For example, priority applications must be able to execute in real-time, or they must provide fault tolerance guarantees. In some cases, the execution of priority applications is bound to specific execution resources, such as specific compute units, and configuration options.

Conventionally, other non-priority applications, referred to as subordinate applications, which can be either non-priority P&C applications or other kinds of non-time critical applications (e.g., statistics collector applications), are hard to implement in such an environment in terms of resources (e.g., hardware), and engineering effort. There is a desire to facilitate the addition of non-priority P&C applications in a P&C system for an electrical substation.

### SUMMARY

According to an aspect of the present disclosure, a P&C system for an electrical substation as set out in claim 1 is provided. According to another aspect of the present disclosure, an electrical substation including the P&C system as described herein is provided. According to yet another aspect of the present disclosure, a method for application orchestration of a P&C system for an electrical substation according to claim 15 is provided.

In embodiments, a P&C system includes a plurality of application execution resources, a memory, and application orchestrator, and one or more application monitors. The application execution resources are each configured to execute one or more priority P&C applications and one or more subordinate applications. The memory is configured to hold one or more subordinate applications to be executed - in addition to the priority application(s) - by the application execution resources. The application orchestrator is configured to determine a subordinate execution capability among each of the application execution resources. The subordinate execution capability is determined for a subordinate application in the memory. The application orchestrator is further configured to instruct each of the application execution resources - among those that have been determined to have subordinate execution capability for the subordinate application in question - to execute an instance of the subordinate application.

The one or more application monitors are configured to determine - for an executed subordinate application instance - whether an execution condition is met. The one or more application monitors are further configured to change an operation mode of the subordinate application instance in case that it is determined that the execution condition is not met for this executed subordinate application instance.

The solution thus introduces an approach to deploy new non-critical P&C applications based on a substation's currently unused resources. In this solution, the new non-critical applications are self-aware: they monitor their operational status to evaluate if they can deliver a correct behavior or not and change their operation mode accordingly, for example decommission themselves accordingly. In addition, the orchestrator keeps track of all P&C applications wishing to execute and selects who to deploy next based on defined metrics, such as the available substation resources. Typically, the orchestrator is not involved in the determination process, or decision making process, as to whether the execution condition is met or not. This may contribute to a simple configuration of the system.

For example, determining whether the execution condition is met may be performed by one application monitor. In another example, determining whether the execution condition is met may be performed in a cooperative manner by multiple application monitors, possibly running as a part of another instance.

An application execution resource, as used herein, is typically a hardware device that, upon reception of instructions in the form of computer code, executes these instructions. Typically, an application execution resource includes a Central Processing Unit (CPU). An application execution resource may include further hardware, such as, but not limited to, memory, an I/O bus, an I/O interface etc.

An application, as used herein, is typically a program (i.e., computer code, software etc.) that is directly or indirectly executable by at least one of the plurality of application execution resources. A directly executable application, as used herein, may refer to an application that, once the respective application execution resource receives the application, is directly executed by the application execution resource without any conversion. For example, a directly executable application includes a binary that matches the architecture of the application execution resource in question. An indirectly executable application, as used herein, may refer to an application that, once the respective application execution resource receives the application, is first converted and then executed by the application execution resource. As nonlimiting examples, converting the indirectly executable application may include interpretation (e.g. bytecode, scripting languages), emulation or virtualization (e.g. including a binary that does not match the architecture of the application execution resource in question), or a combination thereof. An application may also include parts that are directly executable, and parts that are indirectly executable.

A priority P&C application, or priority application, is typically an application used in the substation P&C system to monitor, control, and/or regulate a main substation function, such as a function that, when a fault occurs, leads to an unsafe operation of the substations or parts thereof. That is, a priority P&C application is typically critical for the proper operation of the substation. For example, a main substation function may include a monitoring function of a flowing current and/or an interruption of the flowing current in the case of an overcurrent, but there is no specific limitation to this. The functional behavior of a priority P&C application typically changes according to an operational state external to the application execution resource.

A subordinate application, or non-priority application, is typically an application that is not critical for the proper operation of the substation. A subordinate application includes, for example, a non-priority P&C application. As another example, a subordinate application includes another kind of non-time critical application, i.e. a non-priority, non-P&C application. For example, a subordinate application is an application that collects statistical information on the operation of the substation (i.e., a statistics collector application), but not limited thereto.

The operation mode of the instance, as used herein, includes for example any one of an active mode, an inactive (dormant) mode, a partially active mode, a mode leading to termination of the instance. That is, by changing the operation mode of the instance, a fate of the instance may be manipulated. In an example, changing the operation mode of the instance includes bringing the instance into one of the inactive mode or the partially active mode, or terminating the instance. Changing the operation mode usually results in a different utilization of the application execution resource that the instance is running on. A subordinate execution capability, as used herein, is typically an ability indicating whether the specific subordinate application (the subordinate application for which the determination is made, i.e. the subordinate application in question) can be executed on the specific application execution resource (the application execution resource for which the determination is made, i.e. the application execution resource in question). The ability may include, for example, whether the subordinate application is executable on a specific CPU type, whether conditions such as assumed memory consumption, I/O capabilities etc. are met, etc.

In an example, the subordinate execution capability is determined based on a type of the subordinate application.

In another example, the subordinate execution capability is determined based on a deployment failure rate of the subordinate application. A deployment failure rate may be a metric, such as a metric determined by an event counter over time, indicating how many times in a specific time interval the subordinate application in question could not be executed on any of the application execution resources and/or indicating how many times in a specific time interval the subordinate application in question has been terminated and/or indicating how many times in a specific time interval all instances of the subordinate application in question have been terminated.

In yet another example, the subordinate execution capability is determined based on a level of redundancy of the subordinate application. For example, the subordinate application in question may need a certain level of redundancy, such as at least two running instances thereof. The subordinate execution capability is then met in the case that the level of redundancy is met or exceeded, i.e. when the number of available application execution resources for that subordinate application meets or exceeds the level of redundancy.

In yet another example, the subordinate execution capability is determined based on a hardware architecture of the application execution resource in question. For example, a desired or a required hardware architecture of the subordinate application must match the hardware architecture of the application execution resource.

In yet another example, the subordinate execution capability is determined based on a timing deadline. For example, a desired or a required timing of the subordinate application must match the timing capabilities offered or ensured by the application execution resource.

In yet another example, the subordinate execution capability is determined based on a fault resilience requirement. For example, a desired or a required fault resilience of the subordinate application must match the resilience capabilities offered or ensured by the application execution resource.

Note that the examples may be combined as appropriate.

An execution condition, as used herein, is typically a metric indicating a state of the subordinate application. For example, the execution condition includes one or more of a CPU usage, a memory usage, an input/output (I/O) usage, and a number of executed instances.

In embodiments, the application orchestrator is configured to determine whether there is at least one remaining instance of the subordinate application executed on any of the application execution resources. When it is determined that there is no remaining instance, the application orchestrator adds the subordinate application to the memory. That is, the application orchestrator may then schedule the subordinate application for later deployment.

In embodiments, each instance of the subordinate application includes the application monitor. That is, the application monitor is executed as a part of the subordinate application. In other words: The subordinate application, or any instance thereof, respectively, is self-aware of its execution condition, and may terminate itself. In this example, the orchestrator does not have the burden of surveillance of the proper execution of any of the subordinate applications.

In embodiments, the one or more application monitors are configured to communicate the execution condition to the application orchestrator. Thereby, the orchestrator may be aware of the state of any of the subordinate applications and may base its deployment decision, at least in part, on the received execution condition(s).

In embodiments, the execution condition includes an indication as to whether the instance of the subordinate application is operating in compliance with one or more predefined subordinate application requirements. For example, the predefined subordinate application requirements may include a CPU load factor, a memory consumption, and a level of redundancy, but without any limitation thereto.

In embodiments, determining whether the execution condition is met includes accessing a monitoring interface of the application execution resource that the instance of the subordinate application is running on. In particular, the executed (i.e., running) instance of the subordinate application accesses a monitoring interface of the application execution resource to determine whether a specific execution condition is met, i.e. fulfilled.

In embodiments, determining whether the execution condition is met includes accessing a monitoring element of the P&C system that is different from the application execution resource that the instance of the subordinate application is running on. For example, a higher-level monitoring element or a monitoring element of another application execution resource is accessed. In an example, a heartbeat signal or heartbeat signal from the external monitoring element is received by the application monitor of the execution subordinate application instance.

### BRIEF DESCRIPTION OF THE DRAWINGS

Fig. 1 is a schematic diagram of a conventional P&C system;
Fig. 2 is a schematic diagram of a P&C system according to an embodiment;
Fig. 3 is a schematic diagram of a P&C system according to an embodiment in a state in which no instances of a subordinate application is deployed;
Fig. 4 is a schematic diagram of the P&C system of Fig. 3 in a state in which instances of a subordinate application are deployed.

### DETAILED DESCRIPTION

Technology is described hereinafter with reference to the figures, in which aspects exemplary embodiments are shown. The claimed invention may, however, be embodied in different forms and should not be construed as being limited to the embodiments set forth herein. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment aspect is not necessarily limited to that embodiment aspect and can be practiced in any other embodiments aspects even if not so illustrated, or if not so explicitly described. The features, functions, and advantages may be achieved independently in various embodiments manners or may be combined in yet other embodiments.

Before describing exemplary embodiments aspects illustratively depicted in the several figures, a general introduction is provided to further understanding.

Conventionally, Protection and Control (P&C) applications for substation automation are limited to run on a preselected vendor-specific hardware that is often overprovisioned in terms of resources (e.g., CPUs, memory, cache, etc.) to ensure that certain characteristics of the running P&C applications are always met such as for example predefined real-time execution requirements. As a result, conventionally, multiple such P&C devices - potentially also having different architectures such as CPU, memory etc. - govern the operation of a substation. This may lead to unused resources considering all devices combined, e.g. idling CPUs. Furthermore, conventional P&C application deployments are non-dynamic in a sense that they are restricted to specific compute units with constrained configuration options that cannot be dynamically modified. This leads to overhead in terms of engineering efforts and/or costs. For example, adding a new application to a conventional P&C system may require another new hardware, and focusing on the overall substation, unused resources remain mostly wasted. These existing unused resources in a conventional P&C system are dynamic as they depend on the consumption of the P&C algorithms running on them. The current conventional deployments are not flexible, sustainable, and have high demand for maintainability due to multiple P&C devices.

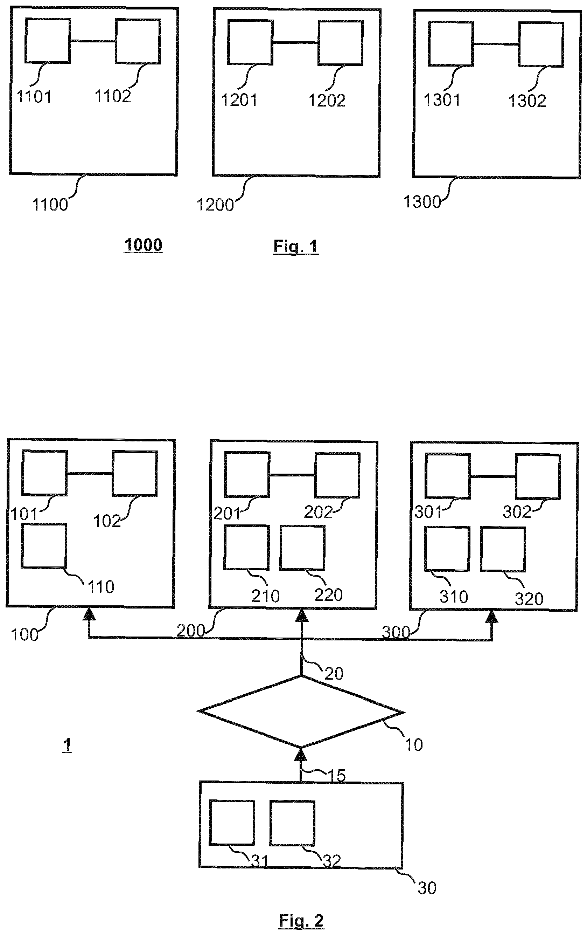

Fig. 1 shows a schematic diagram of a conventional P&C system 1000. The conventional P&C system 1000 includes separate application execution resources 1100, 1200, 1300. Priority P&C applications 1101, 1102; 1201, 1202; 1301, 1302 are executed on the application execution resources 1100, 1200, 1300. The application execution resources 100, 200, 300 may have different hardware architectures, possibly provided by different vendors. The priority P&C applications 1101, 1102; 1201, 1202; 1301, 1302 are typically also vendor-specific. Deploying a non-critical application on any of the application execution resources 1100, 1200, 1300 is difficult for different reasons:
More often than not, the resources are limited, and the applications in the conventional P&C system 1000 are bound to a certain provider (e.g., the manufacturer/vendor of the P&C system 1000) and may not be portable across devices of different providers.

Furthermore, adding a new application from the same provider would typically need an intervention by this provider. On the other hand, adding a new application from a third party will require additional purchase of hardware and engineering efforts to integrate this hardware, and the third-party applications running thereon, within the existing P&C system 1000.

Moreover, non-critical applications, such as non-critical P&C applications, that are to be run on the existing conventional P&C system 1000 must be implemented in such a way that they do not disrupt the execution of the priority (critical) P&C applications 1101, 1102; 1201, 1202; 1301, 1302 that are already running on the application execution resources 1100, 1200, 1300.

With the above general understanding borne in mind, embodiments for P&C systems and corresponding operational methods thereof are described below.

The present disclosure generally describes a technology that allows new subordinate (i.e., non-critical) P&C applications to be autonomously deployed, scaled on existing substation resources and monitored for correct/expected behavior.

A P&C system 1 according to an embodiment is schematically illustrated in Fig. 2. The system 1 includes application execution resources 100, 200, 300. For example, but without limitation, the application execution resources 100, 200, 300 have different capabilities, such as different hardware architectures. Some or each of the application execution resources 100, 200, 300 has one or more priority P&C applications 101, 102, 201, 202, 301, 302 running thereon. Such priority P&C applications may be applications used in the substation P&C system to monitor, control, and/or regulate a main substation function, such as a function that, when a fault occurs, leads to an unsafe operation of the substations or parts thereof. That is, the priority P&C applications are typically critical for the proper operation of the substation.

Some or each of the application execution resources 100, 200, 300 may have instances 110, 210, 220, 310, 320 of one or more subordinate P&C applications running thereon. The subordinate P&C applications may be applications that are not critical for the proper operation of the substation, for example for collecting statistical information on the operation of the substation.

A memory 30 holds one or more of the subordinate applications 31, 32. These are to be additionally executed by the application execution resources 100, 200, 300, depending on constraints, such as not adversely affecting the behavior of the priority P&C applications 101, 102, 201, 202, 301, 302. That is, all additional non-critical P&C applications that an operator would like to run, for example, redundant applications (for better resilience) or analytics applications, are added to a pool of subordinate applications 31, 32 in the memory 30.

An application orchestrator 10 receives one or more of the subordinate applications 31, 32 from the memory 30, for example via a bus 15. The orchestrator 10 determines for each of the application execution resources 100, 200, 300 whether they are capable of executing the subordinate application 31, 32. In other words: The orchestrator 10 determines, among each of the application execution resources 100, 200, 300, a subordinate execution capability for the subordinate application from the memory 30 or in the memory 30. The orchestrator 10 further instructs each of the application execution resources 100, 200, 300 for which the subordinate execution capability has been confirmed to execute an instance of the subordinate application 31, 32. Instructions may be sent, for example, via a communications network 20 or bus.

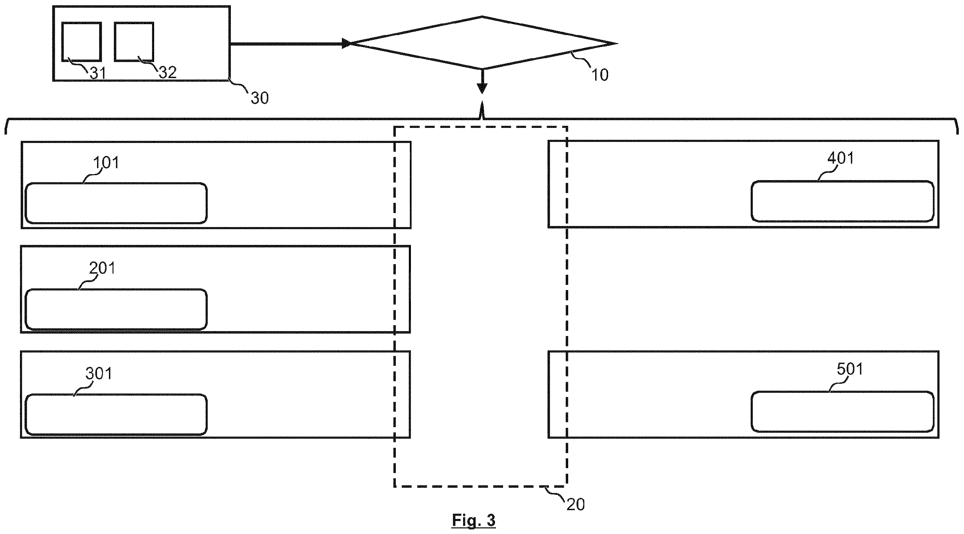

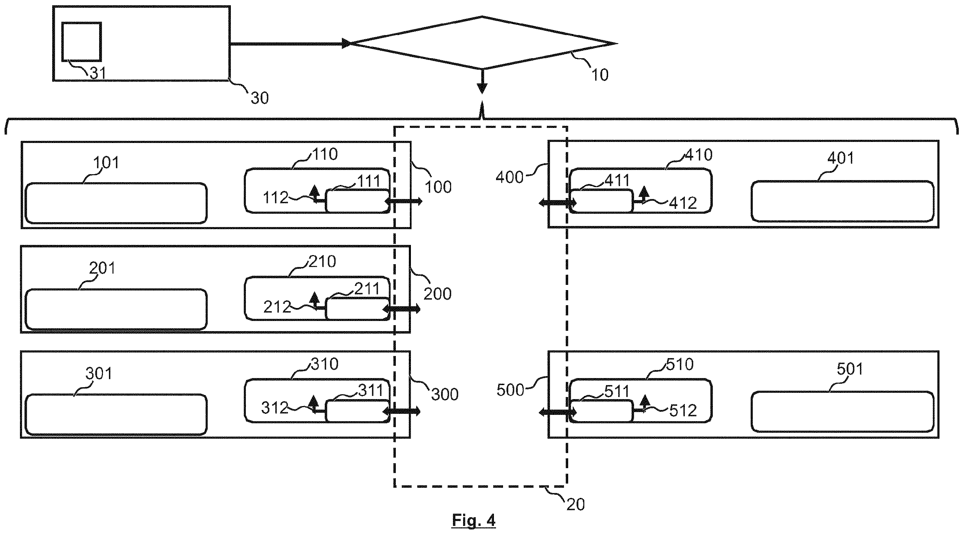

Fig. 3 shows a variant of the system 1 of Fig. 2 having additional application execution resources 400, 500. Note that the number of application execution resources is not limited to any number shown herein, and may generally be two or more than two. In the state of the system 1 shown in Fig. 3, no subordinate application is running on the application execution resources 100, 200, 300, 400, 500 so far. Fig. 4 shows the system 1 of Fig. 3 in a state in which instances 110, 210, 310, 410, 510 of subordinate application 32 are running on each of the application execution resources 100, 200, 300, 400, 500, i.e. after their deployment. Consequently, the subordinate application 32 is now missing from the memory 30.

Each instance 110, 210, 310, 410, 510 includes a corresponding application monitor 111, 211, 311, 411, 511. Each application monitor 111, 211, 311, 411, 511 is configured to determine whether an execution condition 112, 212, 312, 412, 512 is met. When it is determined that the execution condition is not met, the respective application monitor 111, 211, 311, 411, 511 terminates the respective instance 110, 210, 310, 410, 510.

The application orchestrator 10 (an orchestration component) monitors the substation resources (the application execution resources 100, 200, 300, 400, 500) and has access to all new subordinate (non-critical) applications 31, 32 that are supposed to run. The orchestrator 10 has a policy for selecting what application to attempt to run next (i.e., schedule for deployment on the application execution resources 100, 200, 300, 400, 500) and when to dispatch it for deployment.

In an example, this policy is driven by a type of the subordinate application 31, 32 to be dispatched and the rate at which this application 31, 32 fails to be deployed.

The orchestrator 10 dispatches the subordinate application 31, 32 to be deployed on all available application execution resources 100, 200, 300, 400, 500. In the example shown in Figs. 3 and 4, all application execution resources 100, 200, 300, 400, 500 meet the requirements (i.e., have an subordinate execution capability for the subordinate application 32, and consequently, instances 110, 210, 310, 410, 510 of the subordinate application 32 are running on each of the application execution resources 100, 200, 300, 400, 500 after their deployment.

The application monitors 111, 211, 311, 411, 511 serve as a health and reliability monitoring mechanism. In this way, the application instances 110, 210, 310, 410, 510 can determine, at runtime, their correct operation.

If a subordinate application 31, 32 has zero instances successfully running on all available resources, the subordinate application 31, 32 is returned to the application orchestrator 10 in order to attempt a re-deployment.

Typically, a subordinate application 31, 32 specifies the requirements that it needs to be run successfully. For example, these requirements are included in a predefined list of resources of the subordinate application 31, 32. The list of resources may be part of the subordinate application 31, 32 itself. As an example, the list of resources includes one or more attributes such as CPU, memory, I/O, hardware architecture, timing deadlines, resilience to process faults (no resilience, crash resilience, Byzantine resilience, etc.), and number of deployable instances.

That is, every subordinate application 31, 32 in the pool of subordinate applications on the memory defines its requirements by specifying its needs from a list of predefined attributes.

Such predefined attributes may include one or more of different independent components that form the entire application (these components can run in parallel), the desired level of redundancy of each of these components, the required type of resilience against faults. For example, crash resilience for being able to tolerate honest crashes of the devices hosting applications, or Byzantine resilience for being able to tolerate arbitrary malicious behavior of devices hosting applications, the application execution requirements, e.g., required execution/response time (this metric can be defined at the level of the application components), an approximate of the application's resource needs, memory, CPU, I/O, the need to execute on a given hardware architecture, e.g., ARM.

The application orchestrator 10 is aware of all the hardware used for P&C (that includes hardware to run the P&C applications as well as any underlying platform such as operating system (for example, but not limited to, Linux (registered trademark)) or hypervisor (for example, but not limited to, VMware (registered trademark))) and has access to the pool of available subordinate applications 31, 32. The orchestrator 10 selects which application to run next from the pool and when to deploy that application. This selection process may be adapted to a feedback the orchestrator 10 gets from failed deployments. More specifically, the orchestrator 10 may monitor the rate at which subordinate applications fail to deploy and the predefined needs of those applications that failed to deploy. Based on those two metrics the orchestrator 10 may adapt its selection strategy as well as the rate at which it dispatches subordinate applications 31, 32 from the pool for deployment.

After selecting a subordinate application 31, 32 from the pool, the orchestrator 10 deploys the virtual instances 110, 210, 310, 410, 510 of the subordinate application 31, 32 and/or its components to all available substation infrastructure (i.e. all application execution resources 100, 200, 300, 400, 500 determined to have a subordinate execution capability to execute an instance 110, 210, 220, 310, 320, 410, 510 of the subordinate application 31, 32) with an inferior priority compared to the critical systems (i.e. the priority applications 101, 201, 301, 401, 501) running on that hardware.

Via the application monitors 111, 211, 311, 411, 511, correct operation of the instance 110, 210, 310, 410, 510 is measured by the ability of the instance 110, 210, 310, 410, 510 to satisfy the application needs defined in that list. Hence, every subordinate application instance 110, 210, 310, 410, 510 is self-aware of its environment as well as its ability to meet - individually or jointly with other running instances 110, 210, 310, 410, 510 - the desired application needs. An application instance that cannot meet those needs decommissions itself from its host machine, i.e. terminates itself such that it does not run any more on its application execution resource 100, 200, 300, 400, 500. Based on the health and reliability monitoring mechanism, an application instance 110, 210, 310, 410, 510 can also shutdown/decommission itself from a host, should it determine that it is not essential for the correct operation of the entire application. In that sense, subordinate applications can gradually scale down in order to use less resources and shutting down unnecessary instances while maintaining correct application operation.

Each application monitor 111, 211, 311, 411, 511 allows the corresponding instance of the subordinate application to judge if that application instance is operating as expected (according to the predefined application requirement list). For example, monitor 111, 211, 311, 411, 511 of the instance verifies if the approximate resources of the instance are met, if the instance performance is meeting the expected timing deadlines, and if the threshold for the required fault resilience is met.

If any of the predefined requirements is not met, the instance 110, 210, 310, 410, 510 notifies the orchestrator 10 and terminates itself by decommissioning itself from the application execution resource 100, 200, 300, 400, 500. If the orchestrator 10 receives a termination from all instances 110, 210, 310, 410, 510 of that subordinate application 31, 32, it returns the application 31, 32 back to the pool in the memory 30 for later deployment.

The application monitor 111, 211, 311, 411, 511 of a subordinate application instance 110, 210, 310, 410, 510 may be a service to extract local and/or remote knowledge essential used by the instance to decide on what mode to operate in. This service can for example be a standalone library that the application instances are developed with. The local knowledge provided by this service may use an existing tool for monitoring CPU and/or memory usage of the application execution resource 100, 200, 300, 400, 500 that the respective subordinate instance is running on, and/or built-in loggers that provide performance statistics. The remote knowledge may rely on executing a periodical heartbeat exchange with some or more of other elements in the system. For example, the frequency of sending heartbeats is determined by a needed response time of the application and the heartbeat messages themselves are used as a vessel to carry all information that should be communicated by the application instance with the outside world. Such a technique may allow the subordinate application instance to track its visibility to the other system elements as well as the reachability of its messages. These heartbeats as well can help determine whether the needed resilience level of the subordinate application 31, 32 is satisfied by monitoring the number of alive application instances in the system 1.

An application instance 110, 210, 310, 410, 510 may terminate itself (and notify the orchestrator 10) for example when it determines that it is not essential or needed for ensuring that the subordinate application's overall operation is as expected. Then, it may scale down itself to a smaller set of resources (i.e., less running instances) that are judged as necessary for subordinate application operation. An instance may arrive to such a decision by consensus amongst all other running instances of the subordinate application that collectively decide which instances are not needed and can be released.

The decision of not-deploying is not limited to on or off. The behavior may consider how many other instances are available and in what state they are. Such a running subordinate application 31, 32 can adapt its own functionality to the state of the system. The system 1 as a whole achieves a well-defined behavior, e.g. a strict protection which avoids potentially dangerous situations, while using the hardware resources efficiently.

Unlike traditional microservice architectures, the orchestrator 10 is only involved to a minimal extent and serves for selecting which subordinate application 31, 32 to run next and for kicking off the deployment thereof. The decisions on how to manage the subordinate application instance itself, from scaling to assessing conformance to expected behavior, is done autonomously by every subordinate application instance itself.

Although particular embodiments have been shown and described, it will be understood that it is not intended to limit the claimed inventions to the preferred embodiments, and it will be obvious to those skilled in the art that various changes and modifications may be made without department from the spirit and scope of the claimed inventions. The specification and drawings are, accordingly, to be regarded in an illustrative rather than restrictive sense. The claimed inventions are intended to cover alternatives, modifications, and equivalents.

## Claims

1. A Protection and Control, P&C, system (1) for an electrical substation, the P&C system comprising:
a plurality of application execution resources (100, 200, 300, 400, 500) each configured to execute one or more priority P&C applications (101, 102, 201, 202, 301, 302, 401, 501), and configured to execute one or more subordinate applications;
a memory (30) for holding one or more subordinate applications (31, 32) to be additionally executed by the application execution resources (100, 200, 300, 400, 500);
an application orchestrator (10) configured to:
determine, among each of the application execution resources, a subordinate execution capability for a subordinate application in the memory (30);
instruct each of the application execution resources (100, 200, 300, 400, 500) determined to have a subordinate execution capability to execute an instance (110, 210, 220, 310, 320, 410, 510) of the subordinate application (31, 32);
one or more application monitors (111, 211, 311, 411, 511) configured to:
for an executed subordinate application instance, determine whether an execution condition (112, 212, 312, 412, 512) is met;
when it is determined that the execution condition is not met, change an operation mode of the instance.

2. The P&C of claim 1, wherein changing the operation mode of the instance includes bringing the instance into one of an inactive mode or a partially active mode, or terminating the instance.

3. The P&C system of claim 1 or 2, wherein the application orchestrator (10) is further configured to:
determine whether there is at least one remaining instance (110, 210, 220, 310, 320, 410, 510) of the subordinate application (31, 32) executed on any of the application execution resources (100, 200, 300, 400, 500);
when it is determined that there is no remaining instance (110, 210, 220, 310, 320, 410, 510), add the subordinate application (31, 32) to the memory (30).

4. The P&C system of any one of the preceding claims, wherein the application orchestrator (10) is configured to determine the subordinate execution capability based on one or more of a type of the subordinate application (31, 32) and a deployment failure rate of the subordinate application (31, 32).

5. The P&C system of any one of the preceding claims, wherein the application orchestrator (10) is configured to determine the subordinate execution capability based on a level of redundancy of the subordinate application (31, 32).

6. The P&C system of any one of the preceding claims, wherein the application orchestrator (10) is configured to determine the subordinate execution capability based on one or more of a hardware architecture, a timing deadline, and a fault resilience requirement.

7. The P&C system of any one of the preceding claims, wherein the execution condition includes one or more of a CPU usage, a memory usage, an input/output usage, a number of executed instances.

8. The P&C system of any one of the preceding claims, wherein each instance (110, 210, 220, 310, 320, 410, 510) of the subordinate application (31, 32) includes the application monitor (111, 211, 311, 411, 511).

9. The P&C system of any one of the preceding claims, wherein the one or more application monitors (111, 211, 311, 411, 511) are further configured to communicate the execution condition (112, 212, 312, 412, 512) to the application orchestrator (10).

10. The P&C system of any one of the preceding claims, wherein the execution condition (112, 212, 312, 412, 512) includes an indication as to whether the instance (110, 210, 220, 310, 320, 410, 510) of the subordinate application (31, 32) is operating in compliance with one or more predefined subordinate application requirements.

11. The P&C system of any one of the preceding claims, wherein determining whether the execution condition is met includes accessing a monitoring interface of the application execution resource that the instance (110, 210, 220, 310, 320, 410, 510) of the subordinate application (31, 32) is running on.

12. The P&C system of any one of the preceding claims, wherein determining whether the execution condition is met includes accessing a monitoring element of the P&C system different from the application execution resource that the instance (110, 210, 220, 310, 320, 410, 510) of the subordinate application (31, 32) is running on, particularly receiving and evaluating a heartbeat signal or heartbeat message.

13. The P&C system of any one of the preceding claims, wherein the subordinate application includes one of a non-priority P&C application or a non-priority, non-P&C application, optionally a statistics collector application.

14. An electrical substation comprising the P&C system according to any one of the preceding claims.

15. A method for application orchestration of a P&C system for an electrical substation, the method comprising:
determining, by an application orchestrator (10), among each of application execution resources (100, 200, 300, 400, 500) of the P&C system configured to execute one or more priority P&C applications (101, 102, 201, 202, 301, 302, 401, 501) and one or more subordinate applications (31, 32), a subordinate execution capability for a subordinate application contained in a memory (30) of one or more subordinate applications to be additionally executed by the application execution resources, and instructing each of the application execution resources determined to have a subordinate execution capability to execute an instance (110, 210, 220, 310, 320, 410, 510) of the subordinate application (31, 32); and
determining, by one or more application monitors, whether an execution condition is met for an executed instance (110, 210, 220, 310, 320, 410, 510) of the subordinate application (31, 32), and when it is determined that the execution condition is not met, change an operation mode of the instance (110, 210, 220, 310, 320, 410, 510), wherein changing the operation mode optionally includes terminating the instance (110, 210, 220, 310, 320, 410, 510).
